# FASCICULE DE BREVET EUROPEEN

(11) **EP 4 057 444 B1**
(45) Date de publication et mention de la délivrance du brevet: **07.06.2023**
(21) Numéro de dépôt: 22159598.6
(22) Date de dépôt: 02.03.2022
(51) Int. Cl.: H01Q 1/28

(54) **PROCÉDÉS ET KITS POUR MODIFIER UN HÉLICOPTÈRE**
VERFAHREN UND KITS ZUR MODIFIZIERUNG EINES HUBSCHRAUBERS
METHODS AND KITS FOR MODIFYING A HELICOPTER

(30) Priorité: 08.03.2021 FR 2102223
(43) Date de publication de la demande: 14.09.2022
(73) Titulaire: Helidax, 40100 Dax (FR)
(72) Inventeur: CHASSAGNETTE, Christophe, 40100 Dax (FR)
(74) Mandataire: A.P.I. Conseil

(56) Documents cités:
- WO-A1-87/00931
- CN-U- 210 156 539
- US-A- 5 315 309
- US-A1- 2015 288 073

## Description

### Domaine technique

L'invention concerne le domaine des hélicoptères. En particulier, il concerne un procédé de modification d'un hélicoptère, un kit pour modifier une poutre de queue d'hélicoptère et un kit pour modifier un hélicoptère. De tels systèmes sont connus du document CN210156539U.

### Technique antérieure

Les organismes de surveillance du trafic dans le transport aérien prennent très au sérieux les risques de collision en vol entre hélicoptères, en raison des risques mortels pour les occupants de ces hélicoptères.

Pour les éviter, on utilise généralement des dispositifs dénommés TAS (« Traffic Advisory System », en anglais) ou TCAS (« Traffic Collision Avoidance System », en anglais) pour détecter et/ou éviter tout risque de collision en vol à très court terme (moins d'une minute).

Ces dispositifs nécessitent d'installer une ou plusieurs antennes sur le fuselage de l'hélicoptère.

Or, pour certains hélicoptères, toute modification structurelle implique, le cas échéant, la requalification et/ou l'obtention d'une certification de maintien de la navigabilité. Dans certains territoires, il est même nécessaire d'obtenir un document (« Supplemental Type Certificate », STC, en anglais) délivré par l'administration aéronautique du territoire pour confirmer l'autorisation de modifier l'hélicoptère ou un équipement de l'hélicoptère.

Il existe donc un besoin pour un procédé qui permet d'installer des dispositifs du type TCAD ou TCAS sans nécessiter la requalification et/ou l'obtention d'une certification de maintien de la navigabilité.

### Résumé de l'invention

L'invention vise à résoudre, au moins partiellement, ce besoin.

L'invention vise en particulier à un procédé de modification d'un hélicoptère qui comprend une partie avant, une partie arrière et une antenne de transpondeur qui est munie d'un câble et qui est disposée dans la partie avant.

Dans l'invention, le procédé comprend,
- une étape de fourniture pour fournir une poutre de queue de l'hélicoptère qui s'étend depuis la partie arrière et qui comprend une ouverture d'accès de service qui fournit un accès vers l'intérieur de la poutre de queue depuis le dessous et une trappe d'obturation séparable de la poutre de queue et qui est destinée à obturer l'ouverture d'accès de service,
- une étape de retrait pour retirer l'antenne de transpondeur de la partie avant,
- une première étape de forage pour forer une pluralité de trous à travers la trappe d'obturation,
- une étape d'assemblage pour
- fixer l'antenne de transpondeur contre la face extérieure de la trappe d'obturation grâce à une pluralité d'éléments de fixation destinés à être insérés dans tout ou partie de la pluralité de trous, et
- faire passer le câble dans au moins l'un des trous de la pluralité de trous de manière que le câble pénètre à l'intérieur de la poutre de queue lorsque la trappe d'obturation obture l'ouverture d'accès de service.

Dans un premier mode de réalisation, au moins l'un des trous de la pluralité de trous est un premier trou de guidage de câble sensiblement centré qui est destiné à recevoir le câble.

Dans un deuxième mode de réalisation, l'étape d'assemblage comprend la fixation de l'antenne de transpondeur à une plaque de support disposée contre la face intérieure de la trappe d'obturation, la plaque de support étant munie d'un évidement central qui est conçu pour coïncider de manière fonctionnelle avec le premier trou de guidage de câble.

Dans un troisième mode de réalisation, le procédé comprend en outre une deuxième étape de forage pour forer au moins un deuxième trou de guidage de câble sur l'extrémité avant de la poutre de queue au niveau de l'interface entre l'extrémité arrière de la partie arrière de l'hélicoptère et l'extrémité avant de la poutre de queue, le deuxième trou de guidage de câble étant destiné à recevoir le câble.

Dans un quatrième mode de réalisation, le procédé comprend en outre,
- une étape d'installation pour installer au moins un transpondeur sur un support préexistant de la partie arrière de l'hélicoptère, par exemple une tablette, et
- une étape de connexion pour connecter le câble au transpondeur.

Dans un cinquième mode de réalisation, le câble est un câble coaxial.

L'invention vise aussi un premier kit pour modifier une poutre de queue d'hélicoptère qui comprend une ouverture d'accès de service qui fournit un accès vers l'intérieur de la poutre de queue depuis le dessous et une trappe d'obturation séparable de la poutre de queue et qui est destinée à obturer l'ouverture d'accès de service.

Dans l'invention, le premier kit comprend,
- une trappe d'obturation séparable de la poutre de queue et qui est destinée à obturer l'ouverture d'accès de service,
- une antenne de transpondeur munie d'un câble,
- des moyens de forage pour forer,
- une pluralité de trous à travers la trappe d'obturation de sorte qu'au moins l'un des trous de la pluralité de trous est un premier trou de guidage de câble sensiblement centré qui est destiné à recevoir le câble
- au moins un deuxième trou de guidage de câble sur l'extrémité avant de la poutre de queue, le deuxième trou de guidage de câble étant destiné à recevoir le câble
- des moyens de couplage pour coupler l'antenne de transpondeur à la face extérieure de la trappe d'obturation, et
- des moyens de guidage pour faire passer le câble dans le premier trou de guidage de câble puis dans le deuxième trou de guidage.

Dans un premier mode de réalisation, le premier kit comprend en outre une plaque de support destinée à être disposée contre la face intérieure de la trappe d'obturation, la plaque de support étant munie d'un évidement central qui est conçu pour coïncider de manière fonctionnelle avec le premier trou de guidage de câble.

L'invention vise enfin un deuxième kit pour modifier un hélicoptère comprenant une partie avant, une partie arrière et une antenne de transpondeur qui est munie d'un câble et qui est disposée dans la partie avant.

Dans l'invention, le deuxième kit comprend,
- un premier kit selon l'invention, pour modifier une poutre de queue qui s'étend depuis la partie arrière,
- un transpondeur, et
- un support préexistant de la partie arrière de l'hélicoptère, par exemple une tablette, destiné à supporter le transpondeur, de sorte que le câble puisse être connecté au transpondeur en passant au niveau de l'interface entre l'extrémité arrière de la partie arrière de l'hélicoptère et l'extrémité avant de la poutre de queue.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un hélicoptère.
[Fig. 2] La figure 2 représente un procédé de modification de l'hélicoptère de la figure 1, selon l'invention.
[Fig. 3] La figure 3 représente une poutre de queue de l'hélicoptère de la figure 1.
[Fig. 4] La figure 4 représente un assemblage selon l'invention.
[Fig. 5] La figure 5 représente une vue partielle de l'hélicoptère de la figure 1.
Les figures ne respectent pas nécessairement les échelles, notamment en épaisseur, et ce à des fins d'illustration.

### Description des modes de réalisation

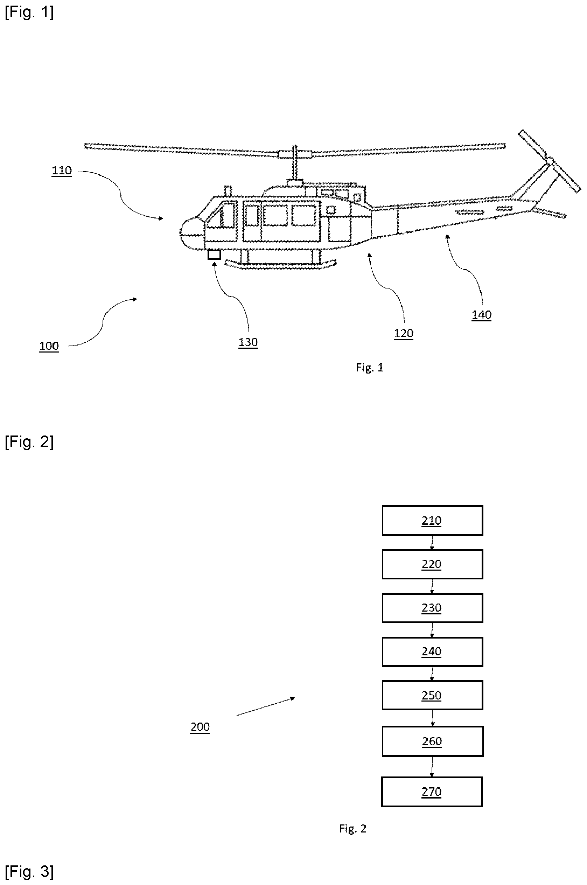

L'invention se rapporte à la modification d'un hélicoptère 100 tel qu'illustré dans la figure 1.

En particulier, dans l'exemple de la figure 1, l'invention concerne un hélicoptère 100 qui comprend une partie avant 110, une partie arrière 120.

L'hélicoptère 100 comprend en outre une antenne de transpondeur 130 qui est disposée dans la partie avant 110 de l'hélicoptère 100.

En effet, de manière classique, les systèmes de surveillance du trafic aérien nécessitent que l'on équipe les hélicoptères d'un transpondeur (sigle « XPDR » en terminologie aéronautique) couplé à une antenne de manière à permettre aux radars secondaires disposés au sol de les identifier et de déterminer leur position dans l'espace.

Dans l'exemple de la figure 1, l'antenne de transpondeur 130 est disposée sous le fuselage de la partie avant 110 de l'hélicoptère 100.

Lorsque l'hélicoptère 100 est en vol, l'antenne de transpondeur 130 est apte à entrer en communication avec un radar secondaire qui est disposé au sol.

Dans un exemple, l'antenne de transpondeur 130 est du type omnidirectionnel.

Dans l'hélicoptère 100, l'antenne de transpondeur 130 est destinée à être connectée à un transpondeur (non représenté) de type unité centrale.

Dans une mise en oeuvre particulière, l'antenne de transpondeur 130 est, en outre, destinée à être connectée à une unité d'affichage (non représentée) disposée dans le cockpit de l'hélicoptère 100.

Par ailleurs, dans l'invention, l'antenne de transpondeur 130 est munie d'au moins un câble pour acheminer les signaux reçus par l'antenne de transpondeur 130.

Dans un exemple, le câble est du type coaxial.

Dans le cadre de l'exploitation d'un hélicoptère, l'inventeur a souhaité installer un système de protection des occupants du type système de détection de trafic aérien (Traffic Advisory System ou « TAS », en anglais) qui permet de localiser d'autres hélicoptères dans son environnement externe proche. En effet, de tels systèmes interrogent en continu les transpondeurs des appareils présents dans un rayon prédéterminé pour déterminer s'il y a un conflit potentiel de trajectoires.

Or, certains des systèmes de détection de trafic aérien nécessitent l'installation, entre autres, d'une antenne à l'endroit où se trouve l'antenne de transpondeur 130.

Or, il n'est pas envisageable de simplement supprimer l'antenne de transpondeur 130 qui est obligatoire pour la mise en oeuvre des systèmes de surveillance du trafic aérien.

En outre, on ne souhaite généralement pas modifier la structure de l'hélicoptère 100, ce qui impliquerait de requalifier l'hélicoptère 100 pour le certifier. En effet, une opération de certification est longue et immobilise l'hélicoptère tant que la certification n'est pas délivrée.

Afin de résoudre ce problème, l'invention propose un procédé tel qu'illustré dans la figure 2.

Le procédé 200 comprend tout d'abord une étape de fourniture 210.

Dans l'étape de fourniture 210, on fournit une poutre de queue 140 de l'hélicoptère 100 de sorte qu'elle s'étend depuis la partie arrière 120 de l'hélicoptère 100, comme illustré dans la figure 1.

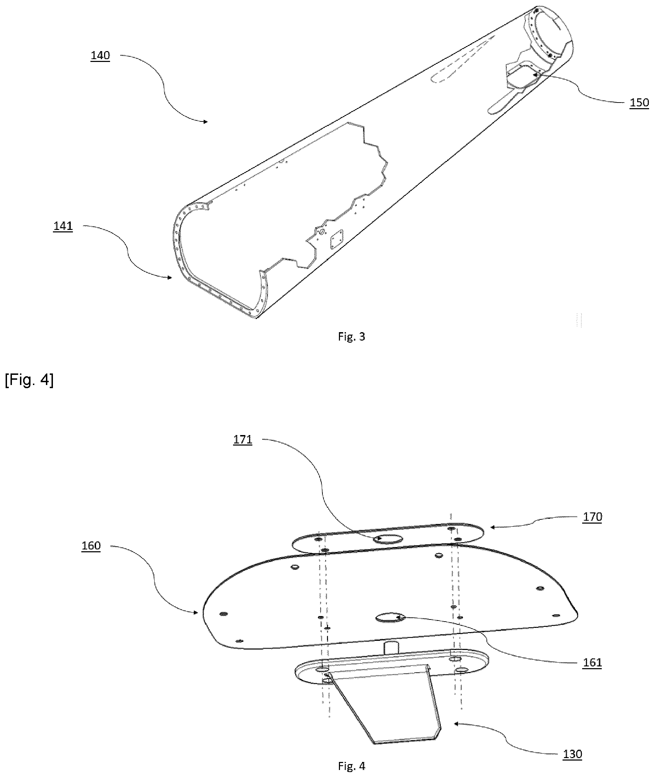

La figure 3 illustre la poutre de queue 140.

En particulier, dans la figure 3, la poutre de queue 140 comprend une ouverture d'accès de service 150 qui fournit un accès vers l'intérieur de la poutre de queue 140 depuis le dessous.

Dans un exemple, on dimensionne l'ouverture d'accès de service 150 de manière à permettre à une main d'homme de s'étendre au travers de l'ouverture d'accès de service 150 pour atteindre l'intérieur de la poutre de queue 140.

En outre, comme illustré dans la figure 4, la poutre de queue 140 comprend une trappe d'obturation 160 qui est séparable de la poutre de queue 140 et qui est destinée à obturer l'ouverture d'accès de service 150.

De retour à la figure 2, le procédé 200 comprend ensuite une étape de retrait 220.

Dans l'étape de retrait 220, on retire l'antenne de transpondeur 130 de la partie avant 110 de l'hélicoptère 100. Ainsi, on pourra y installer l'antenne du système de détection de trafic aérien, comme souhaité.

Puis, le procédé 200 comprend une première étape de forage 230.

Dans la première étape de forage 230, on fore une pluralité de trous à travers la trappe d'obturation 160 comme illustré dans la figure 4.

Ensuite, le procédé 200 comprend une étape d'assemblage 240.

D'abord, dans l'étape d'assemblage 240, on fixe l'antenne de transpondeur 130 contre la face extérieure de la trappe d'obturation 160 grâce à une pluralité d'éléments de fixation destinés à être insérés dans tout ou partie de la pluralité de trous.

Ensuite, on fait passer le câble dans au moins l'un des trous de la pluralité de trous de manière que le câble pénètre à l'intérieur de la poutre de queue 140 lorsque la trappe d'obturation 160 obture l'ouverture d'accès de service 150.

Ainsi, dans le procédé 200 selon l'invention, on choisit de positionner l'antenne de transpondeur 130 sur la trappe d'obturation 160 de l'ouverture d'accès de service 150.

De cette manière, il n'est pas nécessaire de modifier la structure de l'hélicoptère 100, ce qui impliquerait de requalifier l'hélicoptère 100 pour le certifier.

Dans une première façon particulière de réaliser l'invention, au moins l'un des trous de la pluralité de trous est un premier trou de guidage de câble 161 qui est destiné à recevoir le câble. De préférence, le trou de guidage de câble 161 est sensiblement centré dans la trappe d'obturation 160.

Dans une deuxième manière de réaliser l'invention, l'étape d'assemblage 240 comprend la fixation de l'antenne de transpondeur 130 à une plaque de support 170 disposée contre la face intérieure de la trappe d'obturation 160. En particulier, la plaque de support 170 est munie d'un évidement central 171 qui est conçu pour coïncider de manière fonctionnelle avec le premier trou de guidage de câble 161.

Dans une troisième manière de réaliser l'invention, le procédé 200 comprend en outre une deuxième étape de forage 250.

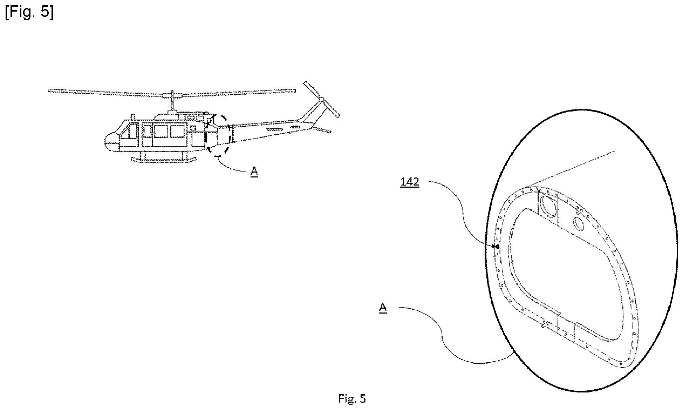

Dans la deuxième étape de forage 250, comme illustré dans la figure 5, on fore au moins un deuxième trou de guidage de câble 142 sur l'extrémité avant 141 de la poutre de queue 140 au niveau de l'interface entre l'extrémité arrière de la partie arrière 120 de l'hélicoptère 100 et l'extrémité avant 141 de la poutre de queue 140. En particulier, le deuxième trou de guidage de câble 142 est destiné à recevoir le câble.

Dans une quatrième manière de réaliser l'invention, le procédé 200 comprend en outre une étape d'installation 260 et une étape de connexion 270.

Dans l'étape d'installation 260, on installe au moins un transpondeur sur un support préexistant de la partie arrière 120 de l'hélicoptère 100, par exemple une tablette (non représentée). De manière classique, le support préexistant peut se trouver dans un compartiment de l'hélicoptère 100, telle une soute, qui est dédié aux équipements techniques.

Dans l'étape de connexion 270, on connecte le câble au transpondeur.

L'invention vise également un premier kit pour modifier une poutre de queue 140 d'hélicoptère 100 qui comprend une ouverture d'accès de service 150 de manière à fournir un accès vers l'intérieur de la poutre de queue 140 depuis le dessous. Le premier kit comprend également une trappe d'obturation 160 qui est séparable de la poutre de queue 140 et qui est destinée à obturer l'ouverture d'accès de service 150.

Dans l'invention, le premier kit comprend une antenne de transpondeur 130, des moyens de forage, des moyens de couplage et des moyens de guidage.

L'antenne de transpondeur 130 est munie d'un câble pour acheminer les signaux reçus par l'antenne de transpondeur 130.

Les moyens de forage sont configurés pour forer, d'une part, une pluralité de trous à travers la trappe d'obturation 160 de sorte qu'au moins l'un des trous de la pluralité de trous est un premier trou de guidage de câble 161 sensiblement centré qui est destiné à recevoir le câble, et d'autre part, au moins un deuxième trou de guidage de câble 142 sur l'extrémité avant 141 de la poutre de queue 140. En particulier, le deuxième trou de guidage de câble 142 est destiné à recevoir le câble.

Les moyens de couplage sont configurés pour coupler l'antenne de transpondeur 130 à la face extérieure de la trappe d'obturation 160.

Les moyens de guidage sont configurés pour faire passer le câble dans le premier trou de guidage de câble 161 puis dans le deuxième trou de guidage.

Dans une deuxième façon de réaliser le premier kit, le premier kit comprend en outre une plaque de support 170 destinée à être disposée contre la face intérieure de la trappe d'obturation 160. En particulier, la plaque de support 170 est munie d'un évidement central 171 qui est conçu pour coïncider de manière fonctionnelle avec le premier trou de guidage de câble 161.

L'invention vise également un deuxième kit pour modifier un hélicoptère 100 qui comprend une partie avant 110, une partie arrière 120 et une antenne de transpondeur 130 qui est munie d'un câble et qui est disposée dans la partie avant 110.

En particulier, le deuxième kit comprend le premier kit, un transpondeur et un support préexistant de la partie arrière 120 de l'hélicoptère 100, par exemple une tablette.

Le premier kit est configuré pour modifier une poutre de queue 140 qui s'étend depuis la partie arrière 120 de l'hélicoptère 100.

La tablette est destinée à supporter le transpondeur de sorte que le câble puisse être connecté au transpondeur en passant au niveau de l'interface entre l'extrémité arrière de la partie arrière 120 de l'hélicoptère 100 et l'extrémité avant 141 de la poutre de queue 140.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

L'invention peut faire l'objet de nombreuses variantes et applications autres que celles décrites ci-dessus.

## Revendications

1. Procédé (200) de modification d'un hélicoptère (100) comprenant une partie avant (110), une partie arrière (120) et une antenne de transpondeur (130) munie d'un câble et disposée dans la partie avant (110), le procédé (200) comprenant :
- une étape de fourniture (210) pour fournir une poutre de queue (140) de l'hélicoptère (100) qui s'étend depuis la partie arrière (120) et qui comprend une ouverture d'accès de service (150) qui fournit un accès vers l'intérieur de la poutre de queue (140) depuis le dessous et une trappe d'obturation (160) séparable de la poutre de queue (140) et qui est destinée à obturer l'ouverture d'accès de service (150),
- une étape de retrait (220) pour retirer l'antenne de transpondeur (130) de la partie avant (110),
- une première étape de forage (230) pour forer une pluralité de trous à travers la trappe d'obturation (160),
- une étape d'assemblage (240) pour
- fixer l'antenne de transpondeur (130) contre la face extérieure de la trappe d'obturation (160) grâce à une pluralité d'éléments de fixation destinés à être insérés dans tout ou partie de la pluralité de trous, et
- faire passer le câble dans au moins l'un des trous de la pluralité de trous de manière que le câble pénètre à l'intérieur de la poutre de queue (140) lorsque la trappe d'obturation (160) obture l'ouverture d'accès de service (150).

2. Procédé (200) selon la revendication 1, dans lequel au moins l'un des trous de la pluralité de trous est un premier trou de guidage de câble (161) sensiblement centré qui est destiné à recevoir le câble.

3. Procédé (200) selon l'une quelconque des revendications 1 à 2 dans lequel l'étape d'assemblage (240) comprend la fixation de l'antenne de transpondeur (130) à une plaque de support (170) disposée contre la face intérieure de la trappe d'obturation (160), la plaque de support (170) étant munie d'un évidement central (171) qui est conçu pour coïncider de manière fonctionnelle avec le premier trou de guidage de câble (161).

4. Procédé (200) selon l'une quelconque des revendications 1 à 3, comprenant en outre une deuxième étape de forage (250) pour forer au moins un deuxième trou de guidage de câble (142) sur l'extrémité avant (141) de la poutre de queue (140) au niveau de l'interface entre l'extrémité arrière de la partie arrière (120) de l'hélicoptère (100) et l'extrémité avant (141) de la poutre de queue (140), le deuxième trou de guidage de câble (142) étant destiné à recevoir le câble.

5. Procédé (200) selon l'une quelconque des revendications 1 à 4 comprenant en outre,
- une étape d'installation (260) pour installer au moins un transpondeur sur un support préexistant de la partie arrière (120) de l'hélicoptère (100), par exemple une tablette, et
- une étape de connexion (270) pour connecter le câble au transpondeur.

6. Procédé (200) selon l'une quelconque des revendications 1 à 5, dans lequel le câble est un câble coaxial.

7. Kit pour modifier une poutre de queue (140) d'hélicoptère (100), qui comprend une ouverture d'accès de service (150) d'une poutre de queue (140), l'ouverture d'accès de service (150) fournissant un accès vers l'intérieur de la poutre de queue (140) depuis le dessous, le kit comprenant:
- une trappe d'obturation (160) séparable de la poutre de queue (140) et qui est destinée à obturer l'ouverture d'accès de service (150),
- une antenne de transpondeur (130) munie d'un câble,
- des moyens de forage pour forer:
- une pluralité de trous à travers la trappe d'obturation (160) de sorte qu'au moins l'un des trous de la pluralité de trous est un premier trou de guidage de câble (161) sensiblement centré qui est destiné à recevoir le câble et,
- au moins un deuxième trou de guidage de câble (142) sur l'extrémité avant (141) de la poutre de queue (140), le deuxième trou de guidage de câble (142) étant destiné à recevoir le câble
- des moyens de couplage pour coupler l'antenne de transpondeur (130) à la face extérieure de la trappe d'obturation (160), et
- des moyens de guidage pour faire passer le câble dans le premier trou de guidage de câble (161) puis dans le deuxième trou de guidage.

8. Kit selon la revendication 7 comprenant en outre une plaque de support (170) destinée à être disposée contre la face intérieure de la trappe d'obturation (160), la plaque de support (170) étant munie d'un évidement central (171) qui est conçu pour coïncider de manière fonctionnelle avec le premier trou de guidage de câble (161).

9. Kit pour modifier un hélicoptère (100) comprenant une partie avant (110), une partie arrière (120) et une antenne de transpondeur (130) qui est munie d'un câble et qui est disposée dans la partie avant (110), le kit comprenant :
- un kit selon l'une quelconque des revendications 7 à 8 pour modifier une poutre de queue (140) qui s'étend depuis la partie arrière (120),
- un transpondeur, et
- un support préexistant de la partie arrière (120) de l'hélicoptère (100), par exemple une tablette, destiné à supporter le transpondeur, de sorte que le câble puisse être connecté au transpondeur en passant au niveau de l'interface entre l'extrémité arrière de la partie arrière (120) de l'hélicoptère (100) et l'extrémité avant (141) de la poutre de queue (140).

## Patentansprüche

1. Verfahren (200) zur Modifizierung eines Hubschraubers (100), der ein vorderes Teil (110), ein hinteres Teil (120) und eine Transponderantenne (130), die mit einem Kabel versehen ist und in dem vorderen Teil (110) angeordnet ist, umfasst, wobei das Verfahren (200) umfasst:
- einen Schritt des Bereitstellens (210), um einen Heckausleger (140) des Hubschraubers (100) bereitzustellen, der sich von dem hinteren Teil (120) aus erstreckt und der eine Wartungszugangsöffnung (150), die einen Zugang zum Innern des Heckauslegers (140) von oben bereitstellt, und eine Verschlussklappe (160), die von dem Heckausleger (140) trennbar ist und die dazu bestimmt ist, die Wartungszugangsöffnung (150) zu verschließen, umfasst,
- einen Schritt des Abnehmens (220), um die Transponderantenne (130) von dem vorderen Teil (110) abzunehmen,
- einen ersten Schritt des Bohrens (230), um eine Vielzahl von Löchern durch die Verschlussklappe (160) hindurch zu bohren,
- einen Schritt des Zusammenbauens (240),
- um die Transponderantenne (130) an der äußeren Seite der Verschlussklappe (160) dank einer Vielzahl von Befestigungselementen, die dazu bestimmt sind, in alle oder einen Teil der Vielzahl von Löchern eingefügt zu werden, zu befestigen, und
- um das Kabel in mindestens eines der Löcher der Vielzahl von Löchern zu geben, so dass das Kabel in das Innere des Heckauslegers (140) eindringt, wenn die Verschlussklappe (160) die Wartungszugangsöffnung (150) verschließt.

2. Verfahren (200) nach Anspruch 1, wobei mindestens eines der Löcher der Vielzahl von Löchern ein erstes, im Wesentlichen zentriertes Kabelführungsloch (161) ist, das dazu bestimmt ist, das Kabel aufzunehmen.

3. Verfahren (200) nach einem der Ansprüche 1 bis 2, wobei der Schritt des Zusammenbauens (240) die Befestigung der Transponderantenne (130) an einer Trägerplatte (170) umfasst, die an der inneren Seite der Verschlussklappe (160) angeordnet ist, wobei die Trägerplatte (170) mit einer mittleren Aussparung (171) versehen ist, die dazu ausgelegt ist, funktionsmäßig mit dem ersten Kabelführungsloch (161) übereinzustimmen.

4. Verfahren (200) nach einem der Ansprüche 1 bis 3, ferner umfassend einen zweiten Schritt des Bohrens (250), um mindestens ein zweites Kabelführungsloch (142) an dem vorderen Ende (141) des Heckauslegers (140) an der Schnittstelle zwischen dem hinteren Ende des hinteren Teils (120) des Hubschraubers (100) und dem vorderen Ende (141) des Heckauslegers (140) zu bohren, wobei das zweite Kabelführungsloch (142) dazu bestimmt ist, das Kabel aufzunehmen.

5. Verfahren (200) nach einem der Ansprüche 1 bis 4, ferner umfassend,
- einen Schritt des Installierens (260), um mindestens einen Transponder auf einer vorhandenen Unterlage des hinteren Teils (120) des Hubschraubers (100), beispielsweise einem Einlegeboden, zu installieren, und
- einen Schritt des Anschließens (270), um das Kabel an den Transponder anzuschließen.

6. Verfahren (200) nach einem der Ansprüche 1 bis 5, wobei das Kabel ein Koaxialkabel ist.

7. Kit zum Modifizieren eines Heckauslegers (140) eines Hubschraubers (100), der umfasst
- eine Wartungszugangsöffnung (150) eines Heckauslegers (140), wobei die Wartungszugangsöffnung (150) einen Zugang zum Innern des Heckauslegers (140) von unten bereitstellt,
wobei das Kit umfasst:
- eine Verschlussklappe (160), die von dem Heckausleger (140) trennbar ist und die dazu bestimmt ist, die Wartungszugangsöffnung (150) zu verschließen,
- eine Transponderantenne (130) mit einem Kabel,
- Bohrmittel zum Bohren:
- einer Vielzahl von Löchern durch die Verschlussklappe (160) hindurch, so dass mindestens eines der Löcher der Vielzahl von Löchern ein erstes, im Wesentlichen zentriertes Kabelführungsloch (161) ist, das dazu bestimmt ist, das Kabel aufzunehmen, und
- mindestens ein zweites Kabelführungsloch (142) am vorderen Ende (141) des Heckauslegers (140), wobei das zweite Kabelführungsloch (142) dazu bestimmt ist, das Kabel aufzunehmen,
- Kopplungsmittel zum Koppeln der Transponderantenne (130) mit der äußeren Seite der Verschlussklappe (160), und
- Führungsmittel zum Geben des Kabels in das erste Kabelführungsloch (161) und dann in das zweite Führungsloch.

8. Kit nach Anspruch 7, ferner umfassend eine Trägerplatte (170), die dazu bestimmt ist, an der inneren Seite der Verschlussklappe (160) angeordnet zu sein, wobei die Trägerplatte (170) mit einer mittleren Aussparung (171) versehen ist, die dazu ausgelegt ist, funktionsmäßig mit dem ersten Kabelführungsloch (161) übereinzustimmen.

9. Kit zum Modifizieren eines Hubschraubers (100), der ein vorderes Teil (110), ein hinteres Teil (120) und eine Transponderantenne (130), die mit einem Kabel versehen ist und die in dem vorderen Teil (110) angeordnet ist, umfasst, wobei das Kit umfasst:
- ein Kit nach einem der Ansprüche 7 bis 8 zum Modifizieren eines Heckauslegers (140), der sich von dem hinteren Teil (120) aus erstreckt,
- einen Transponder, und
- eine vorhandene Unterlage des hinteren Teils (120) des Hubschraubers (100), beispielsweise einen Einlegeboden, die dazu bestimmt ist, den Transponder zu tragen, so dass das Kabel an den Transponder angeschlossen sein kann, indem es an der Schnittstelle zwischen dem hinteren Ende des hinteren Teils (120) des Hubschraubers (100) und dem vorderen Ende (141) des Heckauslegers (140) verläuft.

## Claims

1. A method (200) for modifying a helicopter (100) comprising a front part (110), a rear part (120) and a transponder antenna (130) provided with a cable and disposed in the front part (110), the method (200) comprising:
- a providing step (210) to provide a tail boom (140) of the helicopter (100) which extends from the rear part (120) and which comprises a service access opening (150) which provides access to the interior of the tail boom (140) from below and a closure hatch (160) separable from the tail boom (140) and which is intended to close the service access opening (150),
- a removal step (220) to remove the transponder antenna (130) from the front part (110),
- a first drilling step (230) to drill a plurality of holes through the closure hatch (160),
- an assembly step (240) to:
- fix the transponder antenna (130) against the external face of the closure hatch (160) using a plurality of fixing elements intended to be inserted into all or part of the plurality of holes, and
- pass the cable into at least one of the holes of the plurality of holes such that the cable enters the interior of the tail boom (140) when the closure hatch (160) closes the service access opening (150).

2. The method (200) according to claim 1, wherein at least one of the holes of the plurality of holes is a first substantially centered cable guide hole (161) which is intended to receive the cable.

3. The method (200) according to any one of claims 1 to 2 wherein the assembly step (240) comprises the fixing of the transponder antenna (130) to a support plate (170) disposed against the internal face of the closure hatch (160), the support plate (170) being provided with a central recess (171) which is designed to operatively coincide with the first cable guide hole (161) .

4. The method (200) according to any one of claims 1 to 3, further comprising a second drilling step (250) to drill at least a second cable guide hole (142) on the front end (141) of the tail boom (140) at the level of the interface between the rear end of the rear part (120) of the helicopter (100) and the front end (141) of the tail boom (140), the second cable guide hole (142) being intended to receive the cable.

5. The method (200) according to any one of claims 1 to 4 further comprising:
- an installation step (260) to install at least one transponder on a pre-existing support of the rear part (120) of the helicopter (100), for example a shelf, and
- a connection step (270) to connect the cable to the transponder.

6. The method (200) according to any one of claims 1 to 5, wherein the cable is a coaxial cable.

7. A kit for modifying a tail boom (140) of a helicopter (100) which comprises:
- a service access opening (150) of a tail boom (140), the service access opening (150) providing access to the interior of the tail boom (140) from below,
the kit comprising:
- a closure hatch (160) separable from the tail boom (140) and which is intended to close the service access opening (150),
- a transponder antenna (130) provided with a cable,
- drilling means for drilling:
- a plurality of holes through the closure hatch (160) so that at least one of the holes of the plurality of holes is a first substantially centered cable guide hole (161) which is intended to receive the cable, and
- at least a second cable guide hole (142) on the front end (141) of the tail boom (140), the second cable guide hole (142) being intended to receive the cable,
- coupling means for coupling the transponder antenna (130) to the external face of the closure hatch (160), and
- guide means for passing the cable into the first cable guide hole (161) then into the second guide hole.

8. The kit according to claim 7 further comprising a support plate (170) intended to be disposed against the internal face of the closure hatch (160), the support plate (170) being provided with a central recess (171) which is designed to operatively coincide with the first cable guide hole (161).

9. A kit for modifying a helicopter (100) comprising a front part (110), a rear part (120) and a transponder antenna (130) which is provided with a cable and which is disposed in the front part (110), the kit comprising:
- a kit according to any one of claims 7 to 8 for modifying a tail boom (140) which extends from the rear part (120),
- a transponder, and
- a pre-existing support of the rear part (120) of the helicopter (100), for example a shelf, intended to support the transponder, so that the cable can be connected to the transponder by passing at the level of the interface between the rear end of the rear part (120) of the helicopter (100) and the front end (141) of the tail boom (140).
